# EUROPÄISCHE PATENTSCHRIFT

(11) **EP 0 743 248 B1**
(45) Veröffentlichungstag und Bekanntmachung des Hinweises auf die Patenterteilung: **18.09.2002**
(21) Anmeldenummer: 96107632.0
(22) Anmeldetag: 14.05.1996
(51) Int. Cl.: B64F 1/12

(54) **Verfahren und Vorrichtung zum Manövrieren insbesondere eines gelandeten Hubschraubers**
Method and device for handling a landing helicopter
Procédé de dispositif pour manoeuvrer un hélocoptère à l'atterrissage

(30) Priorität: 19.05.1995 DE 19518454
(43) Veröffentlichungstag der Anmeldung: 20.11.1996
(73) Patentinhaber: MBB Förder- und Hebesysteme GmbH, 27777 Ganderkesee (DE)
(72) Erfinder: Adam, Eckhart, 56237 Wirscheid (DE)
(74) Vertreter: Möller, Friedrich, Dipl.-Ing.

(56) Entgegenhaltungen:
- EP-A- 0 518 405
- US-A- 5 123 615

## Beschreibung

Die Erfindung betrifft ein Verfahren zum Manövrieren insbesondere eines gelandeten Hubschraubers gemäß dem Oberbegriff des Anspruch 1. Des weiteren betrifft die Erfindung eine entsprechende Vorrichtung gemäß dem Oberbegriff des Anspruchs 2.

Aus der EP 0 518 405 A1 ist eine Vorrichtung zum Manövrieren eines auf einer Plattform gelandeten Helikopters bekannt, die vier Querlaufwerke und zwei voneinander beabstandet angeordnete Querführungen aufweist. Die beiden jeweils auf der gleichen Seite liegenden Querlaufwerke sind über eine Längstraverse miteinander verbunden. Auf jeder Längstraverse sind Greifmittel angeordnet, die den gelandeten Hubschrauber an vorgesehenen Stellen seiner beiden Seiten ergreifen. Die beiden Längstraversen sind einseitig gelenkig mit den Querlaufwerken verbunden und teleskopartig ausziehbar. Dadurch ist es möglich, die Längstraverse schräg zur Längsrichtung auszurichten, um einen schief gelandeten Hubschrauber ergreifen zu können. Die Längstraversen und die Greifmittel sind zum Anheben der Räder des Hauptfahrwerks des Hubschraubers hochfahrbar. Dadurch wird gewährleistet, daß die nicht lenkbaren Räder des Hauptfahrwerks während des Querverfahrens nicht auf der Plattform schleifen.

Die bekannte Vorrichtung hat den Nachteil, daß sie zwei Querführungen und vier einzeln ansteuerbare, eigene Antriebe aufweisende Querlaufwerke erfordert. Da die vier Querlaufwerke koordiniert zueinander arbeiten müssen, ist ein großer technischer Steuerungsaufwand erforderlich. Darüber hinaus müssen die Längstraversen Hubmittel aufweisen, die geeignet sind, den gesamten Hubschrauber anzuheben.

Der Erfindung liegt daher die Aufgabe zugrunde, ein einfach arbeitendes Verfahren zum Manövrieren von Hubschraubern und eine Vorrichtung der gattungsgemäßen Art zu schaffen, die einfach und kostengünstig ausgebildet und leicht bedienbar ist.

Ein Verfahren zur Lösung dieser Aufgabe weist die Maßnahmen des Anspruchs 1 auf. Dadurch, daß die Hubschrauber auf Laufwerke mit Standflächen aufgebracht werden, brauchen die Manipulatoren nicht zum Anheben der Hubschrauber ausgebildet zu sein. Des weiteren erübrigen sich zusätzliche Sicherungsmittel, die den Hubschrauber beim Verfahren auf den Standflächen der Laufwerke halten, weil diese Aufgabe auch die Manipulatoren übernehmen, die somit über Mehrfachfunktionen verfügen.

Eine Vorrichtung zur Lösung der der Erfindung zugrundeliegenden Aufgabe weist die Merkmale des Anspruchs 2 auf Demnach braucht die Vorrichtung nur zwei Querlaufwerke mit Standflächen und mit einer Querführung aufzuweisen. Diese einfache Ausbildung der Vorrichtung erlaubt eine kostengünstige Fertigung derselben. Außerdem läßt sich das Verfahren der nur zwei Querlaufwerke leichter koordinieren.

Jedes Querlaufwerk verfügt über einen Manipulator, der in an sich bekannter Art ausgebildet sein kann, insbesondere nach dem Teleskop-Prinzip oder dem Knickarm-Prinzip arbeitet.

Von den Manipulatoren wird nur eine geringe Leistung abverlangt, weil sie den jeweiligen Hubschrauber lediglich verschieben und sichern müssen. Ein Anheben des Hubschraubers ist hingegen nicht erforderlich, da auf den Querlaufwerken Standflächen angeordnet sind, auf denen die Räder des Hauptfahrwerks des Hubschraubers von den Manipulatoren aufgeschoben werden und hierauf während des Querverfahrens des Hubschraubers durch die Querlaufwerke ruhen und von den Manipulatoren gegen Verrutschen gesichert werden.

Vorteilhafte Weiterbildungen der Erfindung ergeben sich aus den Unteransprüchen 3 bis 11.

Bevorzugte Ausführungsbeispiele der Erfindung werden nachfolgend anhand der Zeichnung näher beschrieben. In dieser zeigen:
- Fig. 1: eine Vorrichtung zum Manövrieren eines auf einer Plattform gelandeten Hubschraubers in perspektivischer Darstellung,
- Fig. 2 bis 7: einzelne aufeinanderfolgende Schritte während des Manövrierens des Hubschraubers, und zwar jeweils in Draufsicht,
- Fig. 8: ein Greifmittel eines Manipulators im Eingriff mit einer Nabe eines Rades des Hubschraubers, in Vorderansicht und teilweise Schnittdarstellung,
- Fig. 9: ein Längslaufwerk in einer Draufsicht, und
- Fig. 10: eine zweite Ausführungsform einer Querführung in perspektivischer Darstellung.

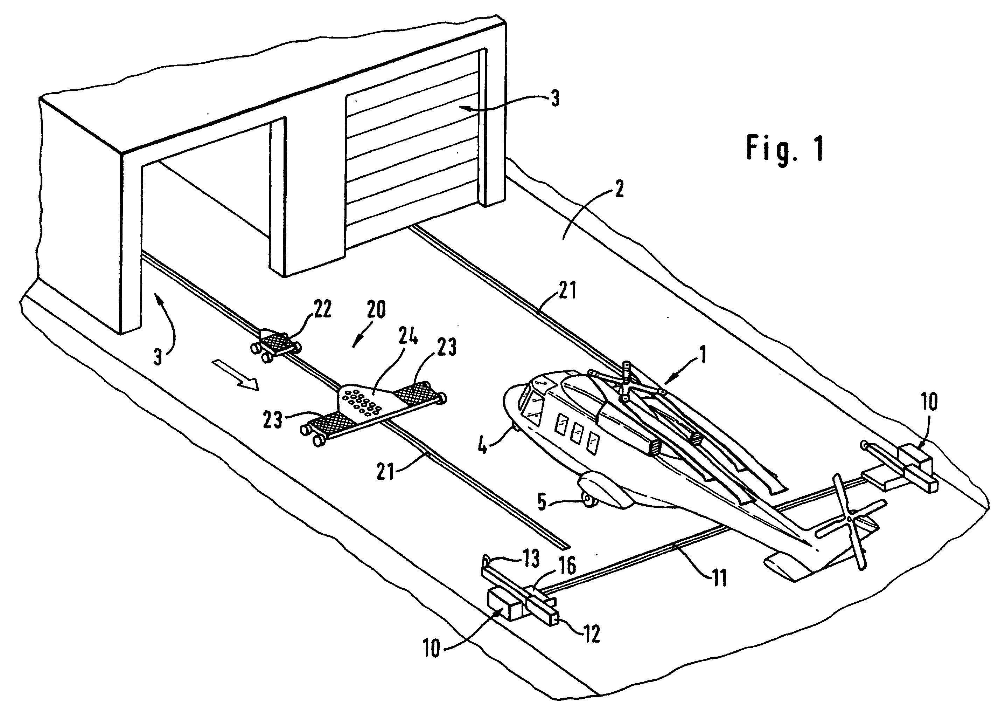

Die hier gezeigte Vorrichtung befindet sich an Bord eines nur teilweise in der Fig. 1 gezeigten Schiffs. Ein Teil des Decks des Schiffs dient als eine Plattform 2 zur Landung des Hubschraubers 1. Des weiteren sind im gezeigten Ausführungsbeispiel zwei Hangars 3 zur Unterbringung von Hubschraubern 1 vorgesehen. Die Vorrichtung kann aber auch zur Unterbringung von Hubschraubern in nur einem Hangar 3 oder mehr als zwei Hangars 3 Verwendung finden.

Die gezeigte Vorrichtung dient zum Manövrieren eines auf der Plattform 2 gelandeten Hubschraubers 1. Insbesondere geht es darum, einen jeweils gelandeten Hubschrauber 1 in einen entsprechenden Hangar 3 hinein- und bei Bedarf wieder herauszubewegen.

Die hier gezeigte Vorrichtung verfügt über zwei Längsführungen 21, die in Längsrichtung des Schiffs verlaufen und in jeweils einen Hangar 3 führen. Den aus jedem Hangar 3 herausweisenden Enden der beiden Längsführungen 21 ist eine gemeinsame Querführung 11 zugeordnet, die quer zur Längsrichtung des Schiffs verläuft. Die eine Querführung 11 bedient somit beide Längsführungen 21. Die Querführung 11 verfügt über zwei Querlaufwerke 10. Entlang jeder Längsführung 21 ist ein verfahrbares Längslaufwerk 20 angeordnet, wobei in den Figuren nur das Längslaufwerk 20 einer Längsführung 21 dargestellt ist.

Auf jedem Querlaufwerk 10 ist ein Manipulator 12 angeordnet, und zwar ortsfest. Jeder Manipulator 12 weist ein bewegbares Greifmittel 13 auf, wodurch ein Hubschrauber 1 an seinen beiden Längsseiten greifbar ist. Da ein Hubschrauber nicht punktgenau landen kann, sind die Greifmittel 13 an jedem Manipulator 12 horizontal und in Längsrichtung um eine bestimmte Länge verschiebbar. Diese Länge betrifft mindestens den zweifachen Umfangsradius der Räder 5 des Hauptfahrwerks des Hubschraubers 1. Auf jedem Querlaufwerk 10 sind Standflächen 16 angeordnet, auf denen die Räder 5 des Hauptfahrwerks des Hubschraubers 1 von den Manipulatoren 12 aufbringbar sind, und zwar vorzugsweise aufgeschoben werden.

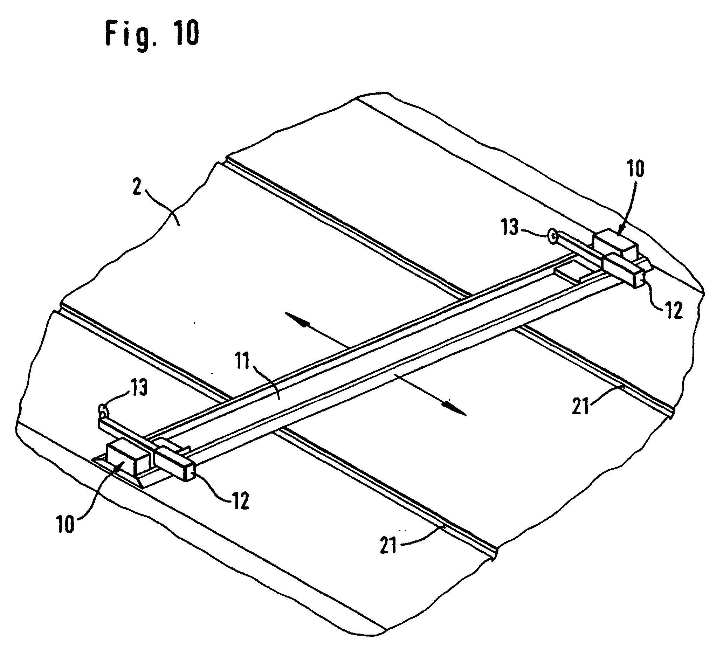

Die Fig. 1 zeigt eine Vorrichtung, bei der die Querführung 11 ortsfest auf der Plattform 2 angeordnet ist. Alternativ kann die Querführung 11 der Querlaufwerke 10 auch längsverschieblich auf der Plattform 2 angeordnet sein, wie es die Fig. 10 zeigt. Hierzu können die Längsführungen 21 mit verwendet werden. Mit der Längsverschiebbarkeit der Querführung 11 und einem gleichzeitigen Einsatz von Manipulatoren 12 mit großem Ausfahr- und Hebebereich erreicht man, daß die Vorrichtung zum Manövrieren von Hubschraubern 1 ebenfalls für andere Zwecke, beispielsweisefür den Transport von Lasten, verwendbar ist.

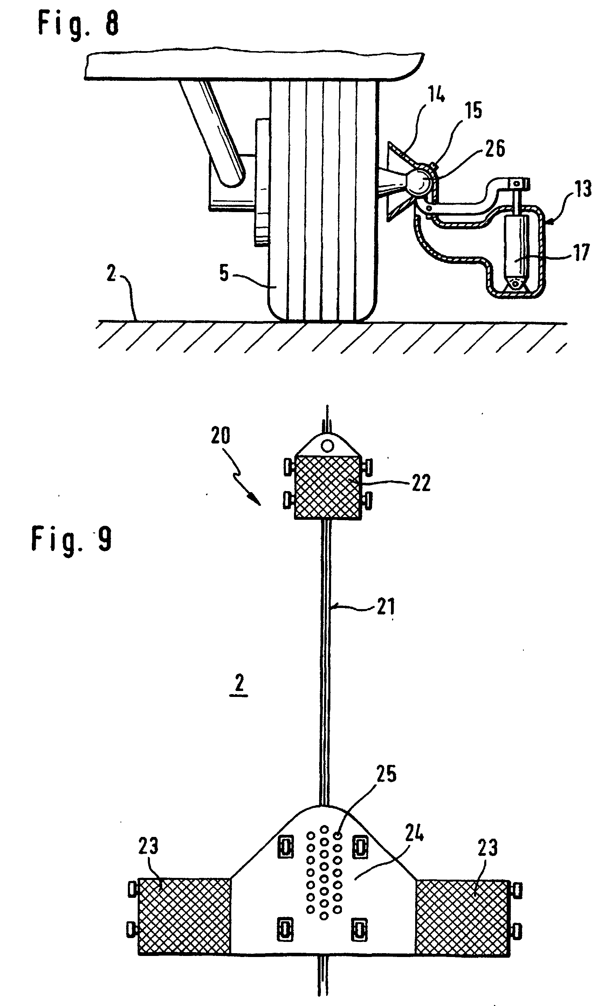

Die Fig. 8 zeigt, daß das an jedem Manipulator 12 angeordnete Greifmittel 13 eine Kupplungsglocke 14 aufweist, die mit einer an einer Radnabe des Hauptfahrwerks des Hubschraubers 1 angeordneten Kupplungskugel 26 in Eingriff bringbar ist. Ein mit einem Druckmittel beaufschlagbarer Zylinder 17 dient zur Verriegelung der Kupplungsglocke 14 an der Kupplungskugel 26. An jeder Kupplungsglocke 14 ist ein Sensor 15 angeordnet, der den Kupplungsvorgang überwacht, insbesondere das Ende des Kupplungsvorgangs erfaßt. Dadurch ist es möglich, das seitliche Heranfahren der Querlaufwerke 10 an den Hubschrauber 1 mit einer entsprechenden Steuerung selbsttätig zu stoppen. Ferner läßt sich damit die Verriegelung der Kupplungsglocke 14 mit der Kupplungskugel 26 durch den Zylinder automatisieren.

Das jeweilige Längslaufwerk 20 weist sowohl Stellflächen 23 für die Räder 5 des Hauptfahrwerks als auch Stellflächen 22 für die Räder 4 des Bugfahrwerks des Hubschraubers 1 auf. Ferner ist das Längslaufwerk 20 mit einem Grid 24 mit Löchern versehen. Damit sind Hubschrauber 1, die im Regelfall mit sogenannten Harpunen ausgestattet sind, auf dem Längslaufwerk 20 arretierbar, und zwar an verschiedenen Stellen.

Die Fig. 9 stellt das Längslaufwerk 20 dar. Es ist derart gestaltet, daß die Stellflächen 22 der Räder 4 des Bugfahrwerks relativ zu den Stellflächen 23 für die Räder 5 des Hauptfahrwerks längsverschieblich sind (Fig. 1). Dadurch kann das Längslaufwerk 20 schnell und einfach an die unterschiedlichen Radstände der verschiedenen Hubschraubertypen angepaßt werden.

Konstruktiv erfolgt die Lösung so, daß die Stellflächen 23 für die Räder 5 des Hauptfahrwerks ortsfest an einem in der Längsführung verlaufenden Verfahrseil befestigt sind, wogegen die Stellfläche 22 für die Räder des Bugfahrwerks an beliebiger Stelle des in der Längsführung 21 verlaufenden Verfahrseils bei Bedarf, nämlich dann, wenn ein entsprechender Abstand der Stellflächen 22 zu den Stellflächen 23 hergestellt worden ist, festklemmbar ist. An der Stelle des Verfahrseils können auch andere Zugorgane Verwendung finden, beispielsweise Ketten oder auch Stangen.

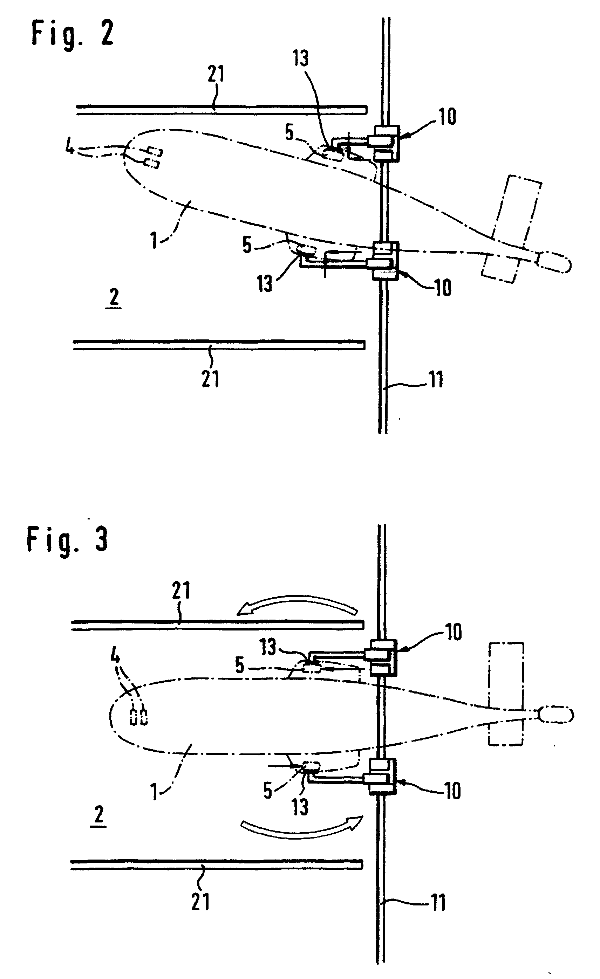

Die Fig. 2 bis 7 zeigen die einzelnen Schritte während des Manövrierens des Hubschraubers 1. Des weiteren geben die breiten Pfeile die Bewegung des Hubschraubers 1 an, wohingegen die schmalen Pfeile die Verstellung der Querlaufwerke 10 verdeutlichen.

Das Manövrieren eines Hubschraubers 1 erfolgt mit der Vorrichtung in folgender Weise:

In der Fig. 2 ist der Hubschrauber 1 unmittelbar nach seiner Landung dargestellt. Zur Sicherung ist der Hubschrauber 1 mit seiner Harpune auf einem auf der Plattform 2 angeordneten Grid (in der Figur nicht dargestellt) verankert. Aufgrund der Bewegung des Schiffs und des Einflusses des Windes landet der Hubschrauber 1 entsprechend der Darstellung in der Regel nicht genau in Richtung der zur Längsschiffsachse verlaufenden Längsführungen 21 (Fig. 1). Bei großer Winkelabweichung dreht man den Hubschrauber 1 mit seinem Heckrotor um seine verankerte Harpune bis er grob in Längsrichtung ausgerichtet ist. Danach werden die beiden Querlaufwerke 10 so verfahren und die hierauf angeordneten Manipulatoren 12 mit den endseitigen Greifmitteln 13 soweit ausgefahren, daß der Hubschrauber 1 an vorgesehenen Befestigungspunkten seiner beiden Längsseiten ergriffen werden kann. Danach löst man die Harpune des Hubschraubers 1, da er nunmehr von den Manipulatoren 12 bzw. Greifmitteln 13 der Querlaufwerke 10 gesichert ist.

Nunmehr wird der Hubschrauber 1, wie in Fig. 3 dargestellt, so gedreht, daß sich seine Längsrichtung parallel zu der Richtung der Längsführung 21 befindet (Fig. 1). Hierzu wird beim Beispiel der Fig. 3 das Greifmittel 13 des eingestellten oberen. Querlaufwerks 10 ausgefahren, wohingegen das Greifmittel 13 des unteren Querlaufwerks 10 eingezogen wird. Die Räder 4 des Bugfahrwerks stehen während der Verdrehung des Hubschraubers 1 in Querstellung.

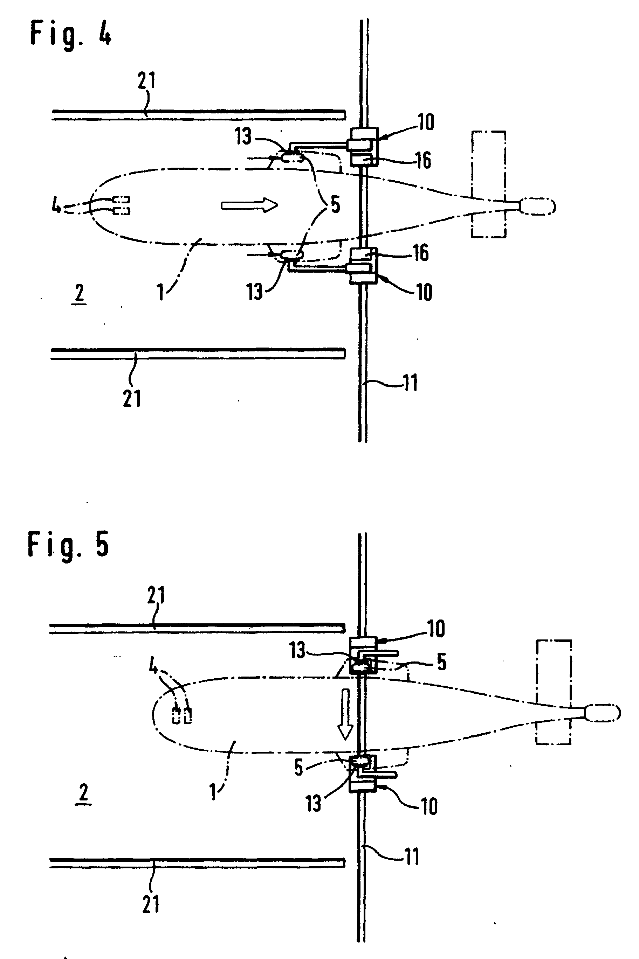

Entsprechend der Fig. 4 wird der Hubschrauber 1 dann so in Längsrichtung verschoben, bis die Räder 5 des Hauptfahrwerks des Hubschraubers 1 auf den Standflächen 16 der Querlaufwerke 10 stehen. Zu diesem Zweck werden die Räder 5 des Hauptfahrwerks des Hubschraubers 1 auf die Standflächen 16 der Querlaufwerke 10 geschoben. Hierzu dienen die Manipulatoren 12, indem die Greifmittel 13 der Manipulatoren 12 entsprechend verfahren, insbesondere eingefahren werden. Die so erreichte Stellung geht aus der Fig. 5 hervor. Bei Aufschieben der Räder 5 des Hauptfahrwerks des Hubschraubers 1 auf die Standflächen 16 der Querlaufwerke 10 stehen die Räder 4 des Bugfahrwerks in Längsrichtung.

Nachdem erneuten Querstellen der Räder 4 des Bugfahrwerks wird der Hubschrauber 1 in Querrichtung soweit verschoben, bis seine Längsachse mit der Längsachse einer der beiden Längsführungen 21 übereinstimmt (Fig. 1). Dieses Querverschieben des Hubschraubers erfolgt durch ein Verfahren beider Querlaufwerke 10 auf der Querführung 11. Dabei wird der Hubschrauber 1 auf den Querlaufwerken 10, insbesondere den Standflächen 16 derselben, durch die Manipulatoren 12, und deren Greifmittel 13, gesichert.

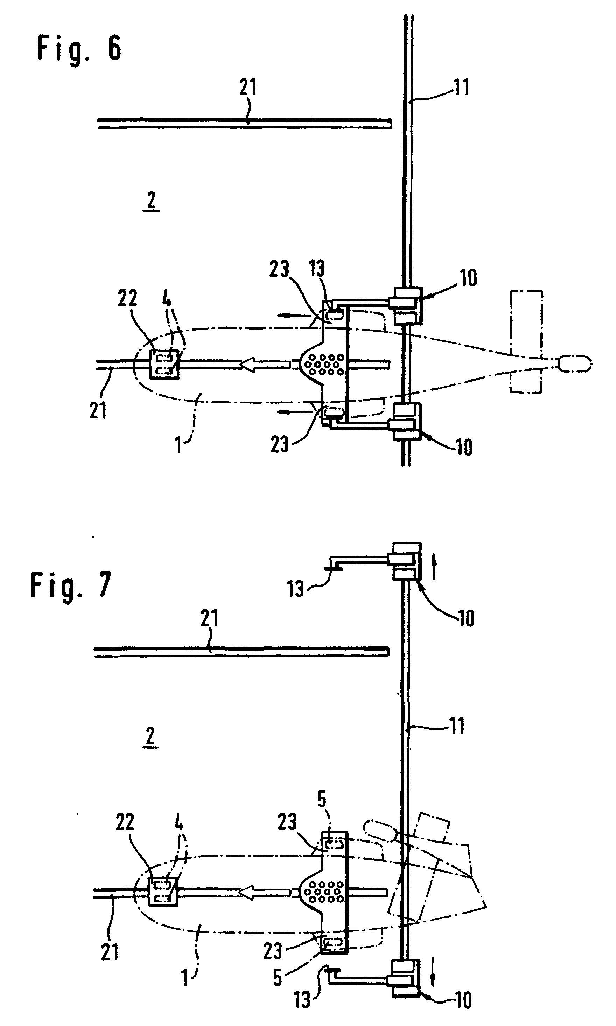

Nach dem Verschieben des Hubschraubers 1 in Querrichtung wird er nach Verstellen der Räder 4 des Bugfahrwerks in Geradeausrichtung mit Hilfe der beiden Manipulatoren 12 bzw. Greifmittel 13 der Querlaufwerke 10 auf das zuvor entsprechend positionierte Längslaufwerk 20 geschoben. Diese Stellung gibt die Fig. 6 wieder.

Nach dem Aufschieben des Hubschraubers 1 auf das Längslaufwerk 20 stehen die Räder 4 des Bugfahrwerks auf der Stellfläche 22 des Längslaufwerks 20 und die Räder 5 des Hauptfahrwerks auf den Stellflächen 23 des Längslaufwerks 20 (Fig. 1). Danach wird die Harpune auf dem Grid 24 verankert, um den Hubschrauber 1 auf dem Längslaufwerk 20 zu sichern.

Abschließend werden wie in der Fig. 7 gezeigt, die Greifmittel 13 vom Hubschrauber 1 gelöst und die Querlaufwerke 10 in ihre Ausgangsposition gefahren. Ferner wird das Heckteil des Hubschraubers 1 eingeklappt, um den Hubschrauber im Hangar 3 unterbringen zu können. Dann wird vom Längslaufwerk 20 der auf den Stellflächen 22 und 23 desselben stehende Hubschrauber 1 entlang der entsprechenden Längsführung 21 in denjenigen Hangar gefahren, in den die betreffende Längsführung 21 hineingeführt ist.

Zum Starten des Hubschraubers wird dieser mit dem Längslaufwerk 20 wieder aus dem Hangar 3 auf die Plattform 2 herausgefahren.

## Patentansprüche

1. Verfahren zum Manövrieren eines auf einer länglichen Plattform (2) gelandeten Hubschraubers (1) durch auf der Plattform (2) verfahrbare Laufwerke, vorzugsweise Querlaufwerke (10), wobei der Hubschrauber (1) an geeigneten Stellen durch den Laufwerken zugeordnete Manipulatoren (12) ergriffen wird, **dadurch gekennzeichnet, dass** der Hubschrauber (1) von den Manipulatoren (12) auf Standflächen (16) der Laufwerke aufgebracht und dort während des anschließenden Verfahrens gehalten wird.

2. Vorrichtung zum Manövrieren eines auf einer länglichen Plattform (2) gelandeten Hubschraubers (1), mit entlang mindestens einer Querführung (11) verfahrbaren Querlaufwerken (10) und den Querlaufwerken (10) zugeordneten Manipulatoren (12), **dadurch gekennzeichnet, dass** die Querlaufwerke (10) Standflächen (16) aufweisen, auf die Räder (4, 5) des Hubschraubers (1) von den Manipulatoren (12) aufbringbar sind.

3. Vorrichtung nach Anspruch 2, **dadurch gekennzeichnet, daß** die Manipulatoren (12) fest mit den Laufwerken verbunden sind.

4. Vorrichtung nach Anspruch 2 oder 3, **dadurch gekennzeichnet, daß** die Manipulatoren (12) Greifmittel (13) aufweisen, und die Greifmittel (13) insbesondere an den Manipulatoren (12) bewegbar sind.

5. Vorrichtung nach Anspruch 4, **dadurch gekennzeichnet, daß** das an jedem Manipulator (12) angeordnete Greifmittel (13) horizontal und/oder in Längsrichtung um eine Länge verschiebbar ist, die mindestens dem zweifachen Umfangsradius der zu ergreifenden Räder (4, 5) des Fahrwerks des Hubschraubers (1), insbesondere des Hauptfahrwerks, entspricht.

6. Vorrichtung nach Anspruch 4, **dadurch gekennzeichnet, daß** die an jedem Manipulator (12) angeordneten Greifmittel (13) eine Kupplungsglocke (14) aufweisen, die mit einer am Hubschrauber (1) angeordneten Kupplungskugel in Eingriff bringbar ist.

7. Vorrichtung nach Anspruch 6, **dadurch gekennzeichnet, daß** an jeder Kupplungsglocke (14) ein Sensor (15) angeordnet ist, der das Ende des Kupplungsvorgangs erfaßt bzw. signalisiert.

8. Vorrichtung nach Anspruch 2, **dadurch gekennzeichnet, daß** die Querführung (11) ortsfest auf der Plattform (2) angeordnet ist.

9. Vorrichtung nach Anspruch 2, **dadurch gekennzeichnet, daß** die Querführung (11) längsverschieblich auf der Plattform (2) angeordnet ist.

10. Vorrichtung nach Anspruch 2, **gekennzeichnet durch** ein Längslaufwerk (20), das sowohl Stellflächen (23) für die Räder (5) des Hauptfahrwerks als auch Stellflächen (22) für die Räder (4) des Bugfahrwerks des Hubschraubers (1) aufweist.

11. Vorrichtung nach Anspruch 10, **dadurch gekennzeichnet, daß** die Stellflächen (22) für die Räder (4) des Bugfahrwerks relativ zu den Stellflächen (23) für die Räder (5) des Hauptfahrwerks längsverschiebbar sind.

## Claims

1. Process by means of which a helicopter (1) which has landed on an elongate platform (2) is manoeuvred by running gears, preferably transverse running gears (10), which can be displaced on the platform (2), the helicopter (1) being gripped at suitable locations by manipulators (12) assigned to the running gears, **characterized in that** the helicopter (1) is positioned on standing surfaces (16) of the running gears by the manipulators (12) and retained there during the subsequent process.

2. Apparatus for manoeuvring a helicopter (1) which has landed on an elongate platform (2), having transverse running gears (10), which can be displaced along at least one transverse guide (11), and manipulators (12) assigned to the transverse running gears (10), **characterized in that** the transverse running gears (10) have standing surfaces (16) on which wheels (4, 5) of the helicopter (1) can be positioned by the manipulators (12).

3. Apparatus according to Claim 2, **characterized in that** the manipulators (12) are fixed to the running gears.

4. Apparatus according to Claim 2 or 3, **characterized in that** the manipulators (12) have gripping means (13), and the gripping means (13) can be moved, in particular, on the manipulators (12).

5. Apparatus according to Claim 4, **characterized in that** the gripping means (13), which are arranged on each manipulator (12), can be displaced horizontally and/or in the longitudinal direction by a length which corresponds at least to twice the circumferential radius of the wheels (4, 5) of the landing gear of the helicopter (1), in particular of the main landing gear, which are to be gripped.

6. Apparatus according to Claim 4, **characterized in that** the gripping means (13), which are arranged on each manipulator (12), have a coupling bell (14), which can be brought into engagement with a coupling ball arranged on the helicopter (1).

7. Apparatus according to Claim 6, **characterized in that** arranged on each coupling bell (14) is a sensor (15) which senses and/or signals the end of the coupling operation.

8. Apparatus according to Claim 2, **characterized in that** the transverse guide (11) is arranged in a stationary manner on the platform (2).

9. Apparatus according to Claim 2, **characterized in that** the transverse guide (11) is arranged in a longitudinally displaceable manner on the platform (2).

10. Apparatus according to Claim 2, **characterized by** a longitudinal running gear (20) which has both adjusting surfaces (23) for the wheels (5) of the main landing gear, and adjusting surfaces (22) for the wheels (4) of the front landing gear, of the helicopter (1).

11. Apparatus according to Claim 10, **characterized in that** the adjusting surfaces (22) for the wheels (4) of the front landing gear can be displaced longitudinally relative to the adjusting surfaces (23) for the wheels (5) of the main landing gear.

## Revendications

1. Procédé pour manoeuvrer un hélicoptère (1) ayant atterri sur une plate-forme longitudinale (2) grâce à des organes de roulement mobiles, de préférence des organes de roulement transversaux (10), prévus sur la plate-forme (2), selon lequel l'hélicoptère (1) est saisi aux endroits appropriés par des manipulateurs (12) agencés sur les organes de roulement, **caractérisé en ce que** l'hélicoptère (1) est monté par les manipulateurs sur des surfaces portantes (16) des organes de roulement et y reste pendant le processus qui suit.

2. Dispositif pour manoeuvrer un hélicoptère (1) ayant atterri sur une plate-forme longitudinale (2), dotés d'organes de roulement transversaux (10) mobiles le long d'au moins un chemin de roulement transversal et de manipulateurs (12) agencés sur les organes de roulement transversaux (10), **caractérisé en ce que** les organes de roulement transversaux (10) présentent des surfaces portantes (16), sur lesquelles les manipulateurs (12) peuvent monter les roues (4, 5) de l'hélicoptère (1).

3. Dispositif selon la revendication 2, **caractérisé en ce que** les manipulateurs (12) sont solidement raccordés aux organes de roulement.

4. Dispositif selon la revendication 2 ou 3, **caractérisé en ce que** les manipulateurs (12) présentent des organes de préhension (13), lesquels sont particulièrement mobiles sur les manipulateurs (12).

5. Dispositif selon la revendication 4, **caractérisé en ce que** l'organe de préhension (13) prévu sur chaque manipulateur (12) peut se déplacer dans le sens horizontal et/ou longitudinal sur une distance qui correspond au moins au double du rayon de la circonférence des roues (4, 5) à saisir du train d'atterrissage de l'hélicoptère (1), tout particulièrement du train d'atterrissage principal.

6. Dispositif selon la revendication 4, **caractérisée en ce que** les organes de préhension (13) agencés sur chaque manipulateur (12) présentent une cloche d'accouplement (14), laquelle peut être mise en prise avec une boulle d'attelage située sur l'hélicoptère (1).

7. Dispositif selon la revendication 6, **caractérisé en ce qu'**un capteur (15) est placé sur chaque cloche d'accouplement (14) et détecte et/ou signale la fin du procédé d'accouplement.

8. Dispositif selon la revendication 2, **caractérisé en ce que** le chemin de roulement transversal (11) est agencé de manière fixe sur la plate-forme (2).

9. Dispositif selon la revendication 2, **caractérisé en ce que** le chemin de roulement transversal (11) est conçu de façon à se déplacer dans le sens longitudinal sur la plate-forme (2).

10. Dispositif selon la revendication 2, **caractérisé par** un organe de roulement longitudinal (20), lequel présente aussi bien des emplacements (23) pour les roues (5) du train d'atterrissage principal que des emplacements (22) pour les roues (4) du train d'atterrissage avant de l'hélicoptère (1).

11. Dispositif selon la revendication 10, **caractérisé en ce que** les emplacements (22) pour les roues (4) du train d'atterrissage avant peuvent être déplacés dans le sens longitudinal par rapport à ceux (23) des roues (5) du train d'atterrissage principal.
